(19) **Europäisches Patentamt / European Patent Office / Office européen des brevets**

(11) **EP 1 346 287 B1**

(12) **FASCICULE DE BREVET EUROPEEN**

(45) Date de publication et mention de la délivrance du brevet:
**14.10.2009 Bulletin 2009/42**

(51) Int Cl.:
***G06F 12/02*** *(2006.01)*

(21) Numéro de dépôt: **01990601.5**

(22) Date de dépôt: **20.12.2001**

(86) Numéro de dépôt international:
**PCT/FR2001/004126**

(87) Numéro de publication internationale:
**WO 2002/050661 (27.06.2002 Gazette 2002/26)**

(54) **PROCEDE D'ALLOCATION DYNAMIQUE DE MEMOIRE PAR BLOCS DE MEMOIRE ELEMENTAIRES A UNE STRUCTURE DE DONNEES, ET SYSTEME EMBARQUE CORRESPONDANT**

VERFAHREN ZUR DYNAMISCHEN SPEICHERZUORDNUNG VON SPEICHERBLÖCKEN AN EINE DATENSTRUKTUR, UND ENTSPRECHENDES EINGEBETTETES SYSTEM

METHOD FOR DYNAMICALLY ALLOCATING MEMORY WORKSPACE BY ELEMENTARY MEMORY BLOCKS TO A DATA STRUCTURE, AND CORRESPONDING ONBOARD SYSTEM

(84) Etats contractants désignés:
**AT BE CH CY DE DK ES FI FR GB GR IE IT LI LU MC NL PT SE TR**

(30) Priorité: **21.12.2000 FR 0016722**

(43) Date de publication de la demande:
**24.09.2003 Bulletin 2003/39**

(73) Titulaire: **CP8 TECHNOLOGIES**
**78431 Louveciennes (FR)**

(72) Inventeurs:
• **FOUGEROUX, Nicolas**
**B.P. 45**
**78431 LOUVECIENNES CEDEX (FR)**
• **HAMEAU, Patrice**
**F-92100 Boulogne Billancourt (FR)**
• **LANDIER, Olivier**
**F-75015 Paris (FR)**

(74) Mandataire: **Cassagne, Philippe M.J. et al**
**Gemalto SA**
**Intellectual Property Department**
**6 Rue de la Verrière**
**92197 Meudon Cedex (FR)**

(56) Documents cités:
**EP-A- 0 686 918**            **WO-A-01/16759**
**WO-A-95/10083**            **GB-A- 2 324 894**

**Description**

L'invention est relative à un procédé d'allocation dynamique de mémoire par blocs de mémoire élémentaires à une structure de données dans un système informatique embarqué, encore désigné par système embarqué, et au système embarqué correspondant.

Les systèmes embarqués, ou objets portatifs actuels, tels que les cartes à microprocesseur ou cartes à puce, les cartes PCMCIA et les assistants électroniques tendent à remplir des fonctions de plus en plus complexes, en raison, notamment, de l'implantation de programmes d'application multiples, les cartes à microprocesseur ou à micro-contrôleur étant, dans un tel cas, désignées par cartes multi-application.

Les applications implantées dans ce type d'objet peuvent être très variées, en raison de la grande souplesse des langages de haut niveau actuels et de leur adaptabilité aux éléments matériels les plus variés par la mise en oeuvre de machines virtuelles notamment. En particulier, dans le cadre de l'évolution des cartes électroniques à microprocesseur ou micro-contrôleur, il est envisagé d'installer dans ce type de carte un nombre important d'applications, applications telles que porte-monnaie électronique PME, contrôle d'accès physique, contrôle d'accès à des services, tels qu'émissions télévisées à péage ou analogues.

L'installation de multiples applications sur ces objets portatifs est rendue possible, d'une part, par la miniaturisation des circuits électroniques et augmentation corrélative de la capacité mémoire des cartes à puce, et, d'autre part, par l'augmentation de la puissance de calcul des unités centrales de traitement.

La multiplication des applications installées sur ces types de matériels pose toutefois le problème crucial d'une allocation dynamique de mémoire optimisée.

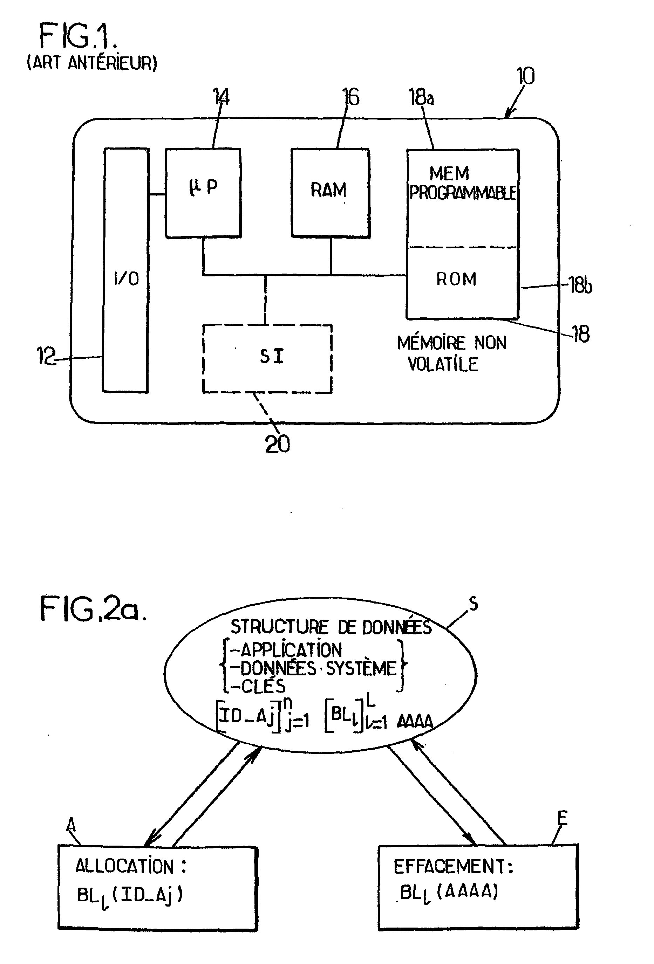

En effet, ainsi que représenté en figure 1, on rappelle que l'objet portatif, constitué, par exemple, par une carte à microprocesseur et référencé 10, comprend de manière classique des circuits d'entrée/sortie, I/O, référencés 12, des ressources de traitement de l'information, référencés 14, constituées par un micro-contrôleur et reliées aux circuits d'entrée/sortie 12. En outre, une mémoire non volatile 18 est prévue, laquelle consiste en une mémoire programmable 18a et en une mémoire de type ROM, ou mémoire de type à accès en lecture seulement 18b. Ces mémoires sont reliées au micro-contrôleur ou microprocesseur 14. Enfin, une mémoire de travail, mémoire RAM, référencée 16, est également prévue et reliée au microprocesseur. Les liaisons précitées s'entendent d'une liaison par BUS.

L'ensemble est géré par un système d'exploitation OS, lequel peut être implanté en mémoire non volatile 18. En outre, dans certains cas, l'objet portatif multi-application peut comporter une unité de calcul cryptographique SI, référencée 20, elle-même reliée au microprocesseur 14.

Le microprocesseur lui-même peut être remplacé ou complété par des circuits logiques implantés dans une puce à semi-conducteur, ces circuits logiques pouvant être des circuits de type ASIC, de l'anglais *Application Specific Integrated Circuit.*

On connaît du document WO 01/16759 déposé avant la présente demande mais publié après, un procédé d'allocation de mémoire divisée en blocs de données dans une carte à puce.

Le document EP-A-0 686 918 décrit une méthode pour l'attribution, la vérification et la libération d'objet qui est considérée très proche de l'invention.

L'invention est définie par le jeu de revendications annexées.

Dans le cadre d'une rationalisation de la gestion de l'espace mémoire disponible sur tout système informatique, en particulier pour un système embarqué tel qu'une carte à microprocesseur ou micro-contrôleur telle que représentée en figure 1, la présente invention a pour objet la mise en oeuvre d'un procédé d'allocation dynamique de mémoire par blocs de mémoire élémentaires à une structure de données, les structures de données correspondant soit à des applications en tant que telles, soit à des données système permettant la mise en oeuvre du système d'exploitation, ou encore à des données spécifiques de sécurisation, telles que des clés d'accès de chiffrement/déchiffrement ou autres. La notion d'allocation dynamique recouvre l'attribution et/ou la suppression de mémoire attribuée.

Un autre objet de la présente invention est également, dans le cadre de la rationalisation précitée, l'accès à la connaissance très rapide de l'appartenance de chaque octet mémorisé en zone mémoire à l'application ou structure de données à laquelle cet octet appartient.

Un autre objet de la présente invention est également la mise en oeuvre d'un procédé d'allocation dynamique de mémoire par blocs de mémoire élémentaires à une structure de données permettant d'éviter ou de réduire tout phénomène d'émiettement, encore désigné phénomène de fragmentation, lors du processus d'allocation/effacement de la mémoire.

Un autre objet de la présente invention est enfin la mise en oeuvre d'un procédé d'allocation dynamique de mémoire par blocs de mémoire élémentaires, dans lequel l'intégrité de la mémoire est assurée par une vérification de la valeur de chaque bloc de mémoire élémentaire alloué.

Le procédé d'allocation dynamique de mémoire à une structure de données identifiée par un numéro d'identification et mémorisée sous forme de paquets d'information numérique dans la zone mémoire d'un système embarqué, objet de la présente invention, prévoit que, la zone mémoire étant subdivisée en blocs de mémoire élémentaires, celui-ci est mis en oeuvre à partir d'au moins une instruction d'effacement d'un bloc mémoire élémentaire et une instruction d'allocation d'un bloc mémoire élémentaire, par laquelle à ce bloc mémoire élémentaire est associée une référence à ce numéro d'identification. Pour allouer un bloc de mémoire élémentaire, ce procédé consiste à attribuer à la référence au numéro d'identification la valeur de ce numéro d'identification. Pour effacer un bloc de mémoire élémentaire, ce procédé consiste à attribuer à la référence au numéro d'identification une valeur arbitraire fixée a priori, distincte de toute valeur de numéro d'identification.

Un système embarqué multi-application, objet de la présente invention, comporte un système d'exploitation assurant la gestion des circuits d'entrée/sortie, de la mémoire vive et de la mémoire non volatile par l'intermédiaire d'un microprocesseur. Selon la revendication 2, il peut comporter en mémoire non volatile un tableau de gestion de la zone mémoire par blocs de mémoire élémentaires, ce tableau comportant au moins, pour chaque bloc de mémoire élémentaire, une référence à un numéro d'identification de la structure de données à laquelle le bloc de mémoire élémentaire correspondant a été alloué et une valeur d'espace mémoire occupé dans le bloc mémoire élémentaire alloué correspondant.

Le procédé objet de l'invention trouve application à l'allocation dynamique de mémoire de tout système informatique embarqué, mais plus particulièrement de tout objet portatif tel qu'une carte à microprocesseur ou micro-contrôleur, dans lequel les ressources mémoires sont réduites, en raison de la taille et de l'encombrement restreints de ce dernier.

Le procédé et le système embarqué multi-application objets de l'invention seront mieux compris à la lecture de la description et à l'observation des dessins ci-après dans lesquels, outre la figure 1 relative à l'art antérieur :

- la figure 2a représente un organigramme fonctionnel illustratif des étapes permettant la mise en oeuvre du procédé d'allocation dynamique de mémoire objet de la présente invention ;
- la figure 2b représente, à titre illustratif, un organigramme fonctionnel d'une variante préférentielle de mise en oeuvre du procédé d'allocation dynamique de mémoire, objet de la présente invention, tel qu'illustré en figure 2a ;
- la figure 2c représente, à titre illustratif, un mode de réalisation particulier du processus de calcul d'une valeur de vérification (*checksum*) ;
- la figure 3 représente, à titre illustratif, une variante préférentielle de mise en oeuvre du procédé objet de la présente invention, dans le cas d'une opération d'effacement d'une structure de données, telle qu'une application ;
- les figures 4a et 4b représentent, à titre illustratif, des diagrammes d'état d'occupation de mémoire, lors de processus d'installation/désinstallation d'applications mis en oeuvre, conformément au procédé d'allocation dynamique de mémoire objet de la présente invention ;
- la figure 5 représente, à titre d'exemple non limitatif, un système embarqué, tel qu'une carte à microprocesseur ou micro-contrôleur, comportant, mémorisé en mémoire non volatile, un tableau de données spécifiques permettant de gérer l'espace mémoire de ce système embarqué, conformément au procédé objet de la présente invention.

Une description plus détaillée du procédé d'allocation dynamique de mémoire par blocs de mémoire élémentaires à une structure de données, objet de la présente invention, sera maintenant donnée en liaison avec la figure 2a et les figures suivantes.

La figure 2a représente un organigramme fonctionnel des étapes essentielles permettant la mise en oeuvre du procédé d'allocation dynamique de mémoire objet de la présente invention, cet organigramme fonctionnel correspondant en fait à un diagramme d'état des étapes essentielles précitées.

En particulier, on comprend que l'étape S correspond à un état de départ dans lequel une structure de données, constituée par une application, par des données système, le cas échéant des clés ou des valeurs numériques spécifiques, doit être mémorisée, c'est-à-dire installée dans le cas d'applications, par exemple dans la zone mémoire d'un système embarqué dont la structure correspond à celle précédemment décrite dans la description en liaison avec la figure 1.

On comprend en particulier que chaque structure de données est identifiée par un numéro d'identification noté $ID\_A_j$ où j peut prendre les valeurs comprises entre 1 et n, n indiquant le nombre total de structures de données susceptibles d'être mémorisées ou installées dans l'espace mémoire précité.

En outre, pour la mise en oeuvre du procédé objet de la présente invention, on indique que l'espace mémoire soumis au procédé d'allocation dynamique de mémoire objet de la présente invention, est avantageusement subdivisé en blocs de mémoire, chaque bloc de mémoire noté $BL_1$, avec 1 pouvant varier de 1 = 1 à 1 = L, est formé par un nombre déterminé d'octets.

Dans un mode de réalisation préférentiel non limitatif, on indique que le nombre d'octets constitutifs de chaque bloc $BL_1$ peut être une puissance de 2 afin de faciliter l'adressage de chaque bloc mémoire et dans chaque bloc mémoire ainsi défini. Dans un mode de réalisation donné à titre d'exemple non limitatif, on indique que chaque bloc peut comporter 256 octets. A l'étape S de départ, l'ensemble des numéros d'identification est noté $\left[ID\_A_j\right]_{j=1}^{n}$ et l'ensemble des

blocs $[BL_l]_{l=1}^L$ .

Enfin, et dans le cadre de la mise en oeuvre du procédé objet de la présente invention, on dispose d'une valeur numérique arbitraire, notée AAAA, cette valeur numérique arbitraire ayant une fonction spécifique qui sera décrite ci-après dans la description, afin de permettre la mise en oeuvre du procédé d'allocation dynamique de mémoire objet de l'invention.

D'une manière générale, on rappelle que chaque structure de données, c'est-à-dire applications, données système, clés ou valeurs numériques spécifiques, identifiée par le numéro d'identification $ID\_A_j$ peut être mémorisée sous forme de paquets d'information numérique dans la zone mémoire du système embarqué précédemment cité.

Par paquets d'information numérique, on entend, d'une part, des paquets de données numériques représentatifs d'un code objet permettant l'installation et l'exécution d'une application par exemple, de données systèmes ou de clés, ou valeurs numériques spécifiques, respectivement des paquets de données d'applications engendrés par une ou plusieurs applications implantées sur le système embarqué correspondant, ou de données numériques intermédiaires permettant la gestion de l'ensemble par le système d'exploitation pour assurer l'exécution des différentes fonctionnalités du système embarqué à partir des données système, des clés ou des valeurs numériques intermédiaires précédemment mentionnées.

Ainsi que représenté en figure 2a, on indique que le procédé d'allocation dynamique de mémoire par blocs de mémoire élémentaires à une structure de données, objet de l'invention, est mis en oeuvre à partir d'au moins une instruction d'allocation d'un bloc mémoire élémentaire $BL_1$, opération d'allocation notée A par laquelle, au bloc mémoire élémentaire précité est associée une référence au numéro d'identification de la structure de données ou application considérée, et à partir d'au moins une instruction d'effacement d'un bloc mémoire élémentaire, instruction correspondant à l'opération E représentée sur la figure 2a.

En particulier, et selon un aspect remarquable du procédé d'allocation objet de la présente invention, l'opération d'allocation A, pour allouer un bloc mémoire élémentaire, consiste à attribuer à la référence au numéro d'identification associé au bloc mémoire élémentaire considéré la valeur du numéro d'identification $ID\_A_j$.

Alors que dans les procédés d'allocation de mémoire des systèmes embarqués antérieurs, les zones de mémorisation des structures de données, telles que les applications, comportent une simple référence au numéro d'identification de la structure de données ou application correspondante réalisée sous forme d'un pointeur, pointeur de début de mémorisation de la structure de données ou application et pointeur de fin de mémorisation de la structure de données ou application considérée, l'étape d'allocation A conforme à l'objet de la présente invention consiste en fait à attribuer à titre de référence au numéro d'identification de la structure de données ou application, la valeur du numéro d'identification précité à chaque bloc $BL_1$ dans lequel les paquets d'information numérique de code objet ou de données sont mémorisés. On comprend en particulier, ainsi que représenté en figure 2a, que l'attribution de la valeur du numéro d'identification à la référence au numéro d'identification consiste à associer de manière bi-univoque la valeur de ce numéro d'identification au bloc mémoire élémentaire correspondant $BL_1$, cette opération étant notée :

$$BL_1(ID\_A_j).$$

On comprend ainsi que la mise en correspondance bi-univoque précitée peut être réalisée par association à chaque bloc $BL_1$ d'un champ de données représentatif de la valeur du numéro d'identification précité $ID\_A_j$ dans un tableau de gestion de l'allocation dynamique de mémoire de la zone mémoire du système embarqué précité.

La structure complète du tableau précité sera donnée ultérieurement dans la description.

Conformément à un autre aspect remarquable du procédé d'allocation dynamique de mémoire par blocs de mémoire élémentaires conforme à l'objet de la présente invention, on indique, en référence à la figure 2a, que l'étape d'effacement E consiste, pour effacer un bloc de mémoire élémentaire, à attribuer à la référence au numéro d'identification associée au bloc de mémoire élémentaire considéré $BL_1$ une valeur arbitraire en lieu et place du numéro d'identification de la structure de données ou application considérée. Cette valeur arbitraire est bien entendu la valeur AAAA précédemment citée dans la description. Cette valeur arbitraire est distincte de toute valeur de numéro d'identification attribué à une structure de données considérée.

Sur la figure 2a, on a représenté les étapes A d'allocation et E d'effacement reliées à l'état de départ S par une double flèche, chaque double flèche représentant bien entendu l'appel de la fonction ou de l'instruction d'allocation A, respectivement de la fonction ou de l'instruction d'effacement E, les opérations d'allocation, respectivement d'effacement étant conduites ainsi que précédemment décrit, et la flèche de retour représentant un acquittement adressé vers l'état de départ S.

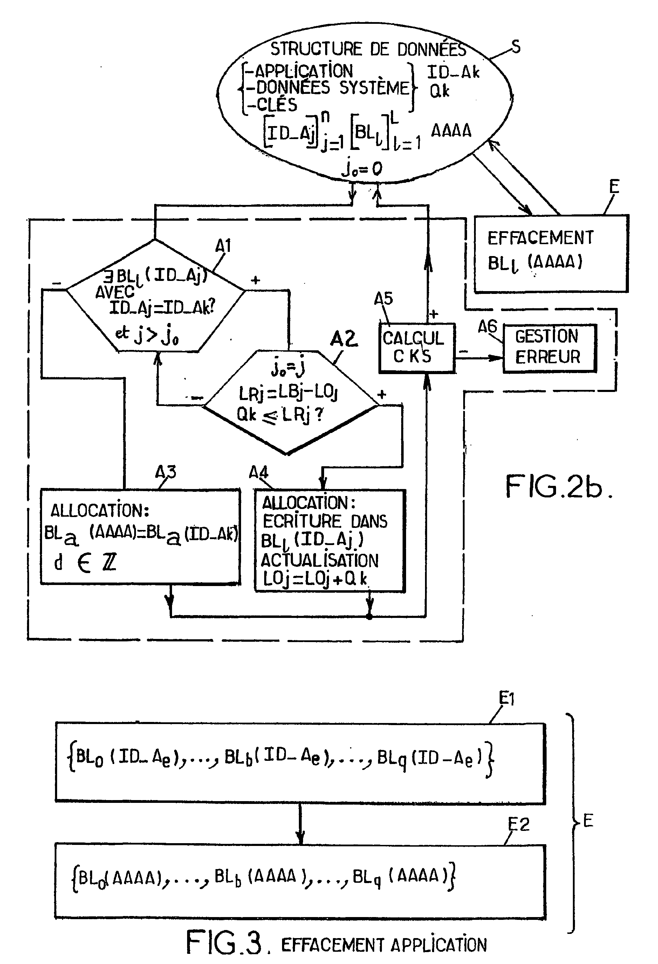

Une description plus détaillée d'un mode de mise en oeuvre préférentiel du procédé d'allocation dynamique de mémoire par blocs de mémoire élémentaires conforme à l'objet de la présente invention, sera maintenant donnée en liaison avec la figure 2b.

Le procédé objet de la présente invention, dans le mode de réalisation de la figure 2b, peut correspondre à un processus d'allocation de mémoire à des données engendrées par une application par exemple, ou le cas échéant obtenues par chargement ou téléchargement de mise à jour d'applications, les paquets d'information numérique, dans les deux cas, pouvant correspondre à ceux d'une application ou d'une structure de données déjà installée.

Pour cette raison, on note :

$$\left[ ID\_A_j \right]_{j=1}^{n}$$ l'ensemble des numéros d'identification de structures de données déjà installées ;

$$\left[ BL_l \right]_{l=1}^{L}$$ l'ensemble des blocs susceptibles d'être utilisés dans la zone mémoire considérée ;

$ID\_A_k$ le numéro d'identification de la structure de données ou application pour laquelle l'allocation mémoire doit être effectuée, $k \in [1,n]$ ;

$Q_k$ l'espace mémoire nécessaire aux paquets d'information numérique auxquels un espace mémoire correspondant doit être alloué. Par ailleurs, on définit un indice j particulier, que l'on note $j_0$, auquel l'on donne la valeur 0.

Dans ces conditions, l'opération d'allocation A, ainsi que représenté en figure 2b, peut consister, pour allouer un bloc de mémoire élémentaire donné, noté $BL_1$, au paquet d'information numérique $Q_k$ précité, et préalablement à toute étape consistant à attribuer à la référence au numéro d'identification la valeur du numéro d'identification, à vérifier, pour tout bloc de mémoire élémentaire déjà alloué, l'identité de la référence au numéro d'identification et du numéro d'identification de la structure de données correspondante, en une étape $A_1$. Cette vérification d'identité consiste à effectuer un test consistant à chercher le premier bloc de mémoire $BL_1$ dont le numéro d'identification associé $ID\_A_j$ correspond au numéro d'identification $ID\_A_k$ de la structure de données ou application pour laquelle l'allocation doit être effectuée.

Le test précité est noté :

$$\exists\ BL_1(ID\_A_j)\ \text{avec}\ ID\_A_j = ID\_A_k\ ?$$
$$\text{et}\ j > j_0$$

Sur réponse négative au test A1, consistant à rechercher le prochain bloc appartenant à l'application dont le numéro d'identification est $ID\_A_k$, une instruction d'allocation d'un bloc de mémoire élémentaire libre est appelée à l'étape A3, aucun des éventuels blocs de mémoire déjà alloués à l'application dont le numéro d'identification est $ID\_A_k$ ne possédant un espace libre suffisant pour contenir le paquet d'informations $Q_k$.

Sur la figure 2b, l'appel de l'instruction d'allocation du bloc de mémoire élémentaire suivant est notée :

$$BL_a(AAAA)\ =\ BL_a(ID\_A_k).$$

L'instruction d'allocation précitée du bloc élémentaire suivant permet ainsi d'allouer un bloc de mémoire élémentaire d'adresse a, a étant une valeur de décalage quelconque, $a \in N$ ensemble des entiers naturels. Le bloc de mémoire élémentaire retenu est bien entendu un bloc élémentaire auquel la valeur arbitraire AAAA a été attribuée précédemment et correspond de ce fait à un bloc effacé, c'est-à-dire à un bloc libre et prêt pour toute opération d'allocation et de mémorisation du paquet d'information $Q_k$ correspondant.

La réponse positive au test $A_1$ indique que le bloc mémoire élémentaire qui vient d'être trouvé est au moins partiellement alloué à la structure de données ou application pour laquelle l'allocation doit être effectuée.

Sur réponse positive au test $A_1$ précité, le procédé d'allocation consiste ensuite à vérifier, en un test $A_2$, l'existence d'un espace mémoire suffisant restant dans le bloc de mémoire élémentaire courant $BL_1(ID\_Aj)$ précité pour mémoriser l'information numérique $Q_k$ précédemment mentionnée.

Sur la figure 2b, la vérification de l'existence d'un espace mémoire suffisant au test $A_2$ comprend la mise à la valeur j de l'indice particulier $j_0$ et est notée :

$$LR_j = LB_j - LO_j \text{ et } Q_k \leq LR_j \text{ ?}$$

relation dans laquelle $LR_j$ désigne l'espace mémoire restant pour le bloc mémoire élémentaire courant, $LB_j$ désigne l'espace mémoire total de chaque bloc élémentaire courant, c'est-à-dire 256 octets dans le mode de réalisation précédemment indiqué, et $LO_j$ désigne l'espace mémoire occupé dans le bloc mémoire élémentaire courant précité.

Sur réponse positive au test de vérification $A_2$, le paquet d'information $Q_k$ nécessitant un espace mémoire inférieur à l'espace mémoire du bloc de mémoire élémentaire courant, au paquet d'information $Q_k$ peut être alloué, en une étape $A_4$, le bloc de mémoire élémentaire courant précité $BL_1(ID\_A_j)$, le paquet d'information numérique $Q_k$ pouvant être mémorisé dans la zone mémoire libre du bloc de mémoire élémentaire courant précité. Ainsi, l'étape d'allocation $A_4$ consiste en une écriture du paquet d'information $Q_k$ dans le bloc $BL_1(ID\_A_j)$ et en une actualisation de la valeur de l'espace mémoire occupé dans le bloc, notée :

$$LO_j = LO_j + Q_k.$$

Sur réponse négative au test de vérification $A_2$, le bloc courant $BL(ID\_A_{j0})$ ne possédant pas assez d'espace libre pour contenir le paquet d'information Qk, il convient de retourner à l'étape A1 afin de rechercher un nouveau bloc dont le numéro d'identification est $ID\_A_k$ et n'ayant pas encore été analysé lors de cette allocation.

Bien entendu, les étapes d'allocation proprement dites $A_3$ et $A_4$ sont suivies d'un retour à l'état de départ S.

Dans un mode de réalisation préférentiel non limitatif, on indique que suite aux étapes d'allocation $A_3$ et $A_4$, et donc suite à l'allocation d'un bloc mémoire élémentaire à une application et bien entendu à la mémorisation par écriture de l'information numérique, c'est-à-dire du paquet d'information $Q_k$ par écriture de cette information dans le bloc mémoire élémentaire alloué, le procédé d'allocation conforme à l'objet de la présente invention peut consister en outre à calculer, en une étape $A_5$ une valeur de vérification du bloc mémoire élémentaire alloué, cette opération étant désignée par calcul CKS sur la figure 2b.

D'une manière générale, on indique que pour la mise en oeuvre de l'étape $A_5$, le calcul de la valeur de vérification, encore désigné par check sum en langage anglo-saxon, peut être effectué grâce à des moyens de calcul de valeur de vérification de type classique, ces moyens de calcul pouvant d'ailleurs correspondre au circuit de calcul spécialisé 20 contenu dans les systèmes embarqués de type classique, ainsi que décrit précédemment dans la description. Une étape $A_6$ de gestion d'erreur de type classique peut être prévue.

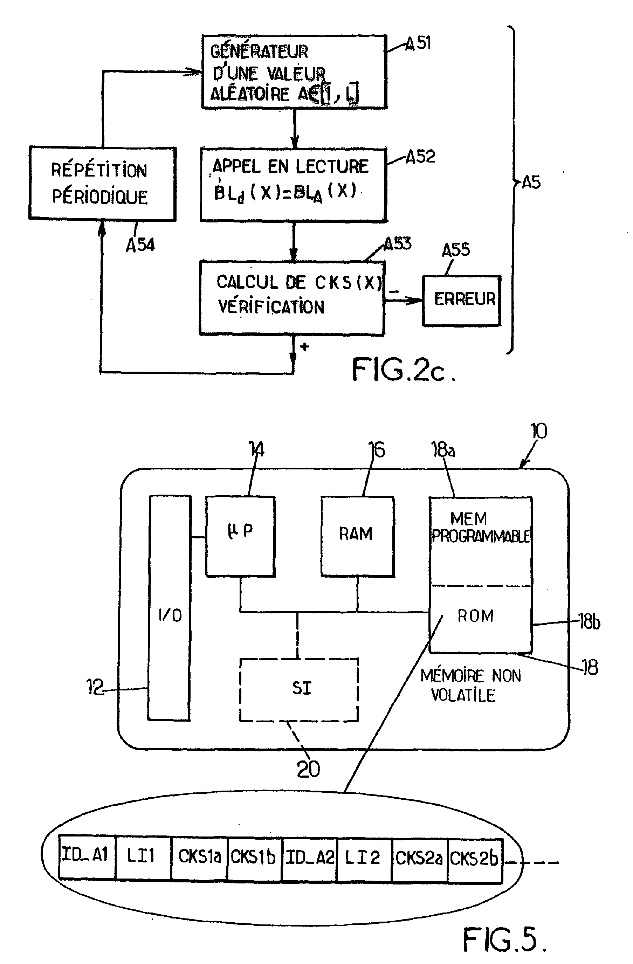

Un mode de réalisation préférentiel de l'opération de calcul d'une valeur de vérification des blocs mémoire élémentaires est un mode de vérification asynchrone, comme décrit avec la figure 2c.

Ainsi que représenté sur la figure précitée et de préférence indépendamment de toute allocation d'un bloc mémoire élémentaire à une structure de données, le procédé d'allocation dynamique de mémoire objet de la présente invention peut consister, pour la mise en oeuvre de l'étape $A_5$, à sélectionner selon un critère de sélection aléatoire l'un des blocs de mémoire élémentaires alloués. Cette opération de sélection sur critère de sélection aléatoire est représentée sur la figure 2c par la génération d'une valeur aléatoire A à l'étape $A_{51}$, cette valeur aléatoire A pouvant être comprise entre [1,L], puis en une étape $A_{52}$ consistant à un appel en lecture du bloc mémoire élémentaire d'adresse A, cette opération étant notée sur la figure 2c :

$$BL_d(X) = BL_A(X).$$

Dans cette relation, X désigne le contenu du bloc de mémoire élémentaire $BL_A$ appelé en lecture.

Les étapes $A_{51}$ et $A_{52}$ précitées sont alors suivies d'une étape $A_{53}$ consistant à calculer une valeur de vérification du bloc mémoire élémentaire alloué retenu. L'étape $A_{53}$ est notée « calcul de CKS(X) ». Cette valeur de vérification est alors comparée à une valeur vraie mémorisée dans le tableau précédemment cité, selon le processus de vérification de type *check* sum précédemment mentionné dans la description.

Sur réponse positive à la vérification précitée, conformément à un aspect remarquable du procédé objet de l'invention, le processus de calcul de la valeur de vérification peut être déclenché périodiquement par une étape $A_{54}$ de retour à l'étape $A_{51}$, ce qui permet de réinitialiser la génération d'une valeur aléatoire distincte, puis l'appel en lecture du bloc de mémoire élémentaire correspondant par l'exécution des étapes $A_{51}$ et $A_{52}$.

Au contraire, sur réponse négative à l'étape $A_{53}$ de calcul de la valeur de vérification, la valeur de vérification n'étant pas vérifiée, une étape $A_{55}$ de retour d'erreur peut être appelée, afin de souligner un problème d'intégrité des données ou de code mémorisés. La gestion de la situation d'erreur de type classique, étape $A_6$, peut prévoir le blocage du système embarqué ou la tentative de récupération des données si un code correcteur d'erreurs est employé comme checksum.

Un exemple de mise en oeuvre spécifique du procédé d'allocation dynamique de mémoire par blocs de mémoire élémentaires, conforme à l'objet de la présente invention, sera maintenant donné ci-après.

Le procédé objet de l'invention a été mis en oeuvre pour des blocs de mémoire élémentaires de 256 octets, à chaque bloc de mémoire élémentaire $BL_1$ étant associées les informations ci-après :

- numéro d'identification $ID\_A_j$ de la structure de données ou de l'application : 1 octet ;
- espace mémoire occupé dénoté $LO_j$: 1 octet ; l'espace mémoire libre peut le cas échéant être utilisé ;
- valeur de vérification ou check *sum* : 2 octets.

De préférence, ainsi qu'il sera décrit ultérieurement dans la description, les informations précédentes sont stockées pour chaque bloc de mémoire élémentaire sous la forme :

    structure bloc info {byte ID_A_j, byte LR_j, word CKS}

Dans la relation précédente, on indique que « byte » désigne un mot d'un octet et « word » désigne un mot de deux octets.

En ce qui concerne le codage du numéro d'identification associé à chaque bloc de mémoire élémentaire, le codage ci-après était utilisé :

$ID\_A_J$ =00h : bloc libre, AAAA = 00h,

FFh : bloc système illisible,

FEh : bloc système lisible,

FDh : valeur spécifique ou clé,

01h-FCh : bloc de mémoire élémentaire appartenant à l'application de numéro d'identification d'application i, avec i ∈ [01h,FCh].

Pour tout $ID\_A_j$, $LR_j$ peut prendre toute valeur de 01h à FFh, la valeur 00h signifiant en outre que le bloc de mémoire élémentaire courant est totalement utilisé, aucun espace mémoire dans le bloc n'étant disponible.

Le procédé d'allocation dynamique de mémoire par blocs de mémoire élémentaires objet de la présente invention, permet en outre d'effacer toute structure de données, ou application, identifiée par un numéro d'identification de manière particulièrement souple et efficace, de la manière ci-après, ainsi que représenté en figure 3.

En raison de l'attribution à chaque bloc de mémoire élémentaire d'une référence correspondant au numéro d'identification, le processus d'effacement correspondant peut consister, selon la revendication 3, à collecter tous les blocs $BL_0$, $BL_b$ à $BL_q$ dont le numéro d'identification $ID\_A_e$ correspond à l'application à effacer à l'étape $E_1$ représentée en figure 3, puis à attribuer à la référence au numéro d'identification de l'ensemble des blocs de mémoire élémentaires alloués à l'application considérée la valeur arbitraire AAAA précédemment mentionnée à l'étape $E_2$ de la même figure 3, soit à la valeur 00h précitée.

En effet, compte tenu de cette attribution, tous les blocs $BL_0$, $BL_b$ à $BL_q$ sont alors considérés comme des blocs effacés et donc disponibles pour une allocation future, et pour une écriture dans la totalité de l'espace mémoire réservé pour chacun de ces derniers.

En ce qui concerne la vérification de l'appartenance d'un octet dans la zone mémoire allouée conformément au procédé objet de la présente invention, le numéro d'identification de l'application ou de la structure de données correspondante peut être obtenu par la relation suivante :

```
ID_A_k =
bloc info [(adresse_octet-adresse_début_zone mémoire)/64]
```

La relation précédente est obtenue compte tenu du mode de réalisation décrit pour des blocs de 256 octets par bloc et 4 octets d'information dans bloc info par bloc courant considéré.

La mise en oeuvre du procédé d'allocation dynamique de mémoire selon la revendication 2 permet de réduire ou de supprimer l'émiettement de la zone mémoire gérée, émiettement encore désigné par fragmentation. En effet, lors de la création d'un objet ou d'un type de variable, on cherche dans la liste bloc info le premier bloc appartenant à l'application ou à la structure de données et ayant un espace libre suffisant pour la création de cet objet ou type de variable considéré. Dans ces conditions, selon la revendication 2 un nouveau bloc n'est affecté à une application, ou à une structure de données, que si la place restante n'est pas suffisante pour l'objet ou type de variable à créer dans au moins un des blocs déjà affecté à cette application ou cette structure de données. Ainsi, il n'existe jamais aucun objet ou type de variable qui ne soit réparti sur au moins deux blocs non consécutifs. Les objets ou types de variable précités n'ayant pas à être stockés dans un ordre spécifique, tout bloc effacé, et qui en conséquence se retrouve libre, peut toujours être réaffecté et réalloué, soit à des données issues d'applications, soit à du code objet relatif à une application. Le risque d'émiettement est donc limité au chargement et à l'effacement fréquent de blocs de codes consécutifs.

Le phénomène d'émiettement de la zone mémoire peut en outre être réduit par un processus de réallocation des blocs de mémoire élémentaires aux paquets de code objet, par réarrangement par translation.

En ce qui concerne la procédure de vérification des blocs, on indique que la valeur de vérification est calculée pour chaque bloc soumis au processus d'allocation, c'est-à-dire à chaque écriture du bloc considéré. Par contre, il n'est pas nécessaire de vérifier les blocs à chaque lecture afin de ne pas ralentir de manière trop importante l'accès à la mémoire.

Dans une variante de mise en oeuvre, on indique que la valeur de vérification peut être calculée à chaque lecture pour des blocs contenant des données jugées critiques, telles que par exemple des données sensibles de l'OS ou des valeurs de clés pour lesquelles le numéro d'identification peut-être à la valeur FDh.

En ce qui concerne la répétition périodique du calcul de la valeur de vérification sur des blocs sélectionnés de manière aléatoire, on indique que la période peut être fixée à 50 ms par exemple. Le calcul de la valeur de vérification de l'ensemble des blocs peut également être mis en oeuvre lors d'événements très spécifiques du système embarqué, tels que le changement d'état de vie de ce dernier dans le domaine d'application des cartes à puce par exemple.

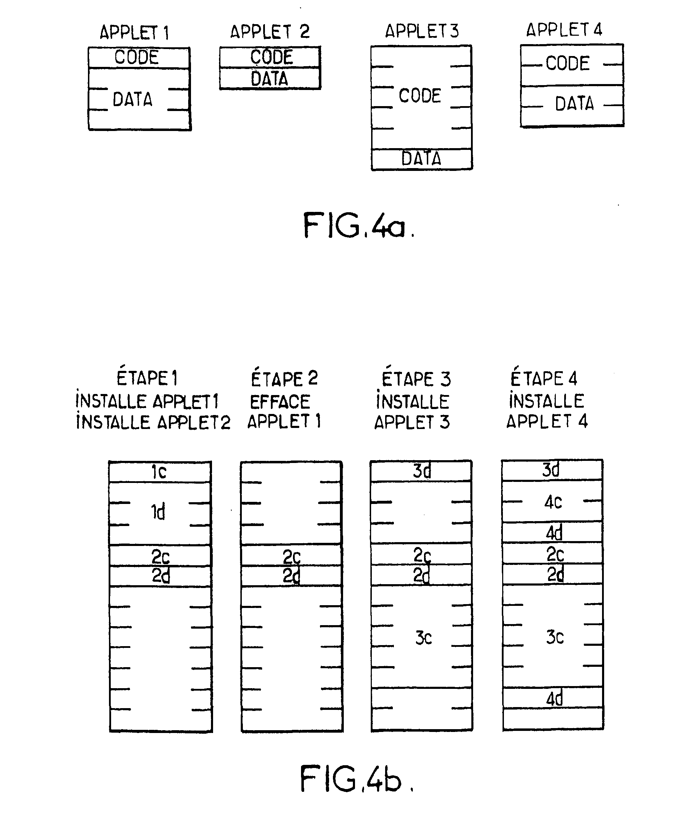

Un exemple d'installation et de désinstallation d'applications de type appliquette ou *applet* en langage anglo-saxon, grâce à la mise en oeuvre du procédé d'allocation dynamique de mémoire par blocs de mémoire élémentaires conforme à l'objet de la présente invention, sera maintenant donné en liaison avec les figures 4a et 4b. Les appliquettes peuvent correspondre à des programmes écrits en langage de haut niveau de tout type.

En référence à la figure 4a, on considère 4 appliquettes, désignées par Applet 1, Applet 2, Applet 3 et Applet 4, comportant chacune :

TABLEAU I

| Applet 1 | 150 octets de code, soit 1 bloc<br>600 octets de données, soit 3 blocs |
|---|---|
| Applet 2 | 150 octets de code, soit 1 bloc<br>150 octets de données, soit 1 bloc |
| Applet 3 | 1100 octets de code, soit 5 blocs<br>200 octets de données, soit 1 bloc |
| Applet 4 | 400 octets de code, soit 2 blocs<br>300 octets de données, soit 2 blocs |

En référence à la figure 4b, on indique que l'étape 1 correspond à l'installation de l'Applet 1 et de l'Applet 2, l'étape 2 à l'effacement de l'Applet 1, l'étape 3 l'installation de l'Applet 3 et l'étape 4 l'installation de l'Applet 4.

Le tableau II ci-après donne la valeur, exprimée en notation hexadécimale, du numéro d'identification $ID\_A_k$ où k prend les valeurs 1 à 4, la valeur 00 en notation hexadécimale correspondant à la valeur arbitraire AAAA.

TABLEAU II

| Etape 1 | 01 | 01 | 01 | 01 | 02 | 02 | 00 | 00 | 00 | 00 | 00 | 00 | 00 |
|---|---|---|---|---|---|---|---|---|---|---|---|---|---|
| Etape 2 | 00 | 00 | 00 | 00 | 02 | 02 | 00 | 00 | 00 | 00 | 00 | 00 | 00 |
| Etape 3 | 03 | 00 | 00 | 00 | 02 | 02 | 03 | 03 | 03 | 03 | 03 | 00 | 00 |
| Etape 4 | 03 | 04 | 04 | 04 | 02 | 02 | 03 | 03 | 03 | 03 | 03 | 04 | 00 |

Un système embarqué spécifique multi-application permettant la mise en oeuvre du procédé d'allocation dynamique de mémoire conformé à l'objet de la présente invention sera maintenant décrit en liaison avec la figure 5.

On rappelle que le système embarqué correspondant est représenté à titre d'exemple non limitatif sous forme d'une carte à microprocesseur ou à micro-contrôleur. Ce système embarqué comporte un système d'exploitation assurant la gestion des circuits d'entrée/sortie de la mémoire vive et de la mémoire non volatile par l'intermédiaire du microprocesseur précité.

En référence à la mise en oeuvre du procédé objet de la revendication 8, il comporte en mémoire programmable non volatile $18_a$, un tableau de gestion de la zone mémoire par blocs de mémoire élémentaires, ce tableau comportant au moins, pour chaque bloc de mémoire élémentaire $BL_1$ précédemment décrit dans la description, une référence à un numéro d'identification d'une structure de données à laquelle le bloc de mémoire élémentaire correspondant a été alloué, et une valeur d'espace mémoire occupée dans le bloc de mémoire élémentaire correspondant alloué. La référence au numéro d'identification de la structure de données est notée $ID\_A_1$, respectivement $ID\_A_2$ et la valeur d'espace mémoire occupée est notée $LI_1$ respectivement $LI_2$ sur la figure 5.

En outre, ainsi que représenté sur la figure précitée, le tableau peut comporter, pour chaque bloc de mémoire élémentaire correspondant, une valeur de vérification du bloc élémentaire alloué, ces valeurs étant notées $CKS_{1a}$ et $CKS_{1b}$, respectivement $CKS_{2a}$ et $CKS_{2b}$. On indique que, dans le mode de réalisation de la figure 5, la valeur de vérification est codée sur 2 octets.

Dans le cas de la mise en oeuvre du procédé objet de la présente invention, pour un système embarqué tel qu'une carte à puce, et pour une taille de mémoire non volatile $18_a$ constituée par une mémoire programmable de type EEPROM de 32 koctets, le tableau précité occupe un espace mémoire correspondant à 32 x koctets/256 x 4 = 512 octets. On note que l'espace mémoire utilisé pour la gestion de cet espace mémoire, selon le procédé d'allocation dynamique de mémoire par blocs de mémoire élémentaires conforme à l'objet de la présente invention, occupe, du fait de la mémorisation nécessaire du tableau précité, 1,56% de la taille mémoire effectivement disponible. Cette valeur faible de la zone mémoire occupée pour la mise en oeuvre du procédé objet de la présente invention est tout à fait acceptable compte tenu du gain obtenu en souplesse d'utilisation et d'installation d'applications variées, dont le nombre ne dépend que de la taille de la mémoire non volatile 18a.

**Revendications**

1. Procédé d'allocation dynamique de mémoire à une (ou des) structure(s) de données (ID_Aj) identifiée(s) par un numéro d'identification et mémorisée(s) sous forme de paquets d'information numérique dans une zone mémoire d'un système embarqué, ladite zone mémoire étant subdivisée en blocs de mémoire élémentaires (BL1) et ce procédé d'allocation dynamique étant mis en oeuvre à partir d'au moins une instruction d'effacement (E) d'un bloc de mémoire élémentaire et une instruction d'allocation (A) d'un bloc mémoire élémentaire, par laquelle audit bloc de mémoire élémentaire est associée une référence audit numéro d'identification, le procédé comprenant les étapes consistant,

   ■ pour allouer un bloc de mémoire élémentaire :

      - à attribuer à ladite référence audit numéro d'identification la valeur dudit numéro d'identification, et,

   ■ pour effacer un bloc de mémoire élémentaire:

      - à attribuer à ladite référence audit numéro d'identification une valeur arbitraire, distincte de toute valeur de numéro d'identification.

2. Procédé selon la revendication 1, dans lequel, pour allouer un bloc de mémoire élémentaire, celui-ci comprend en outre, préalablement à l'étape consistant à attribuer à ladite référence audit numéro d'identification la valeur dudit numéro d'identification, pour tout bloc de mémoire élémentaire alloué, les étapes consistant :

      - à vérifier (A1) l'identité de ladite référence audit numéro d'identification et dudit numéro d'identification, et, sur réponse positive à cette vérification d'identité, ledit bloc de mémoire élémentaire courant étant au moins partiellement alloué à cette structure de données,
      - à vérifier (A2) l'existence d'un espace mémoire suffisant restant dans ledit bloc de mémoire élémentaire courant pour mémoriser ladite information numérique, et à appeler une instruction d'allocation d'un bloc de mémoire élémentaire suivant, sinon.

3. Procédé selon la revendication 1 ou 2, dans lequel, pour effacer une structure de données identifiée par un numéro d'identification (ID_Ae), celui-ci consiste à attribuer à ladite référence audit numéro d'identification de l'ensemble des blocs de mémoire élémentaires alloués à cette structure de données ladite valeur arbitraire (AAAA).

4. Procédé selon la revendication 1, dans lequel, suite à l'allocation d'un bloc de mémoire élémentaire à une structure de données et suite à la mémorisation par écriture de ladite information numérique dans ledit bloc de mémoire élémentaire alloué, celui-ci consiste en outre à calculer une valeur de vérification (CKS) du bloc de mémoire élémentaire.

**5.** Procédé selon la revendication 1, dans lequel, indépendamment de toute allocation d'un bloc de mémoire élémentaire à une structure de données, celui-ci comprend en outre les étapes consistant :

- à sélectionner (A51), selon un critère de sélection aléatoire, l'un des blocs de mémoire élémentaires alloués, et
- à calculer (A53) une valeur de vérification (CKS(X)) dudit bloc de mémoire élémentaire alloué.

**6.** Procédé selon la revendication 5, dans lequel ladite sélection puis ledit calcul d'une valeur de vérification sont déclenchés périodiquement, avec une période de valeur déterminée.

**7.** Système embarqué comportant une zone mémoire allouée de manière dynamique à une (ou des) structure(s) de données (ID_Aj) identifiée(s) par un numéro d'identification et mémorisée(s) sous forme de paquets d'information numérique, la dite zone mémoire étant subdivisée en blocs de mémoires élémentaires (BL1), à chaque bloc étant associée une référence au dit numéro d'identification, la dite référence ayant :

■ la valeur dudit numéro, d'identification lorsque le bloc de mémoire élémentaire est alloué,
■ une valeur arbitraire, distincte de toute valeur de numéro d'identification, lorsque le bloc de mémoire élémentaire est effacé.

**8.** Système embarqué selon la revendication 7, **caractérisé en ce qu'**il comporte en mémoire programmable non volatile (18a) un tableau de gestion de la zone mémoire par blocs de mémoire élémentaires, ledit tableau comportant au moins pour chaque bloc de mémoire élémentaire :

- une référence à un numéro d'identification d'une structure de données (ID_Ai) à laquelle le bloc de mémoire élémentaire correspondant a été alloué ;
- une valeur d'espace mémoire occupé (LIi) dans ledit bloc de mémoire élémentaire correspondant alloué.

**9.** Système embarqué selon la revendication 7, dans lequel ledit tableau comporte en outre pour chaque bloc de mémoire élémentaire une valeur de vérification (CKS1a à CKS2b) du bloc de mémoire élémentaire alloué correspondant.

**Claims**

**1.** Dynamic memory allocation process to one (or some) data structure(s) (ID_aj) identified by an identification number and stored in the form of digital information packets in a memory area of an on-board system, the aforesaid memory area being sub-divided into elementary memory blocks (BL1) and this dynamic allocation procedure being implemented from at least one erase instruction (E) of an elementary memory block and one allocation instruction (A) from an elementary memory block, by which a reference to the aforesaid identification number is associated with the aforesaid elementary memory block, the process comprising steps consisting,

■ to allocate an elementary memory block:

- of assigning the value of the aforesaid identification number to the aforesaid reference to the aforesaid identification number, and,

■ to erase an elementary memory block:

- of assigning an arbitrary value, distinct from any identification number value, to the reference to the aforesaid identification number.

**2.** Process according to claim 1, in which, to allocate an elementary memory block, this also comprises, prior to the step consisting of assigning the value of the aforesaid identification number to the aforesaid reference to the aforesaid identification number, for any elementary memory block allocated, steps consisting:

- of checking (A1) the identity of the aforesaid reference to the aforesaid identification number and of the aforesaid identification number, and, in the event of a positive response to this identity check, the aforesaid current elementary memory block being at least partially allocated to this data structure,
- of checking (A2) there is sufficient memory space remaining in the aforesaid current elementary memory block to store the aforesaid digital information, and if not of calling an allocation instruction for a subsequent elementary memory block.

3. Process according to claims 1 or 2, in which, to erase a data structure identified by an identification number (ID_Ae), this comprises assigning the aforesaid arbitrary value (AAAA) to the aforesaid reference to the aforesaid identification number for all the elementary memory blocks allocated to this data structure.

4. Process according to claim 1, in which, following the allocation of an elementary memory block to a data structure and following storage by writing the aforesaid digital information into the aforesaid allocated elementary memory block, this also comprises calculating a checksum value (CKS) for the elementary memory block.

5. Process according to claim 1, in which, independently of allocating an elementary memory block to a data structure, this also comprises steps consisting:

- of selecting (A51), in accordance with random selection criteria, one of the allocated elementary memory blocks, and
- of calculating (A53) a checksum value (CKS (X)) for the aforesaid allocated elementary memory block.

6. Process according to claim 5, in which the aforesaid selection then the aforesaid calculation of a checksum value are activated periodically, with a pre-determined frequency.

7. On-board system comprising a memory area allocated dynamically to one (or some) data structure(s) (ID_aj) identified by an identification number and stored in the form of digital information packets, the aforesaid memory area being sub-divided into elementary memory blocks (BL1), a reference to the aforesaid identification number being associated with each block, the aforesaid reference having:

■ the value of the aforesaid identification number when the elementary memory block is allocated,
■ an arbitrary value, distinct from any identification number value, when the elementary memory block is erased.

8. On-board system according to claim 7, **characterised in that** it includes a management table for the memory area based on elementary memory blocks, stored in non-volatile programmable memory (18a), for each elementary memory block the aforesaid table including at least:

- a reference to an identification number for a data structure (ID_Ai) to which the corresponding elementary memory block has been allocated;
- a value for memory space occupied (LIi) in the aforesaid corresponding allocated elementary memory block.

9. On-board system according to claim 7, in which for each elementary memory block the aforesaid table also comprises a checksum value (CKS1a to CKS2b) for the corresponding allocated elementary memory block.

**Patentansprüche**

1. Verfahren zur dynamischen Zuordnung eines Speichers zu einer (oder mehreren) Datenstruktur(en) (ID_Aj), die durch eine Identifikationsnummer identifiziert wird (werden) und in Form von digitalen Informationspaketen in einem Speicherbereich eines eingebetteten Systems gespeichert wird (werden), wobei der oben genannte Speicherbereich in Elementarspeicherblöcke (BL1) unterteilt ist und dieses Verfahren zur dynamischen Zuordnung über mindestens einen Löschbefehl (E) für einen Elementarspeicherblock und einen Zuordnungsbefehl (A) für einen Elementarspeicherblock erfolgt, durch den dem besagten Elementarspeicherblock eine Referenz zu der oben genannten Identifikationsnummer zugewiesen wird, wobei das Verfahren aus folgenden Etappen besteht,

• für die Zuordnung eines Elementarspeicherblocks:

- Zuweisung des Wertes der besagten Identifikationsnummer zu der besagten Referenz der besagten Identifikationsnummer und

• für das Löschen eines Elementarspeicherblocks:

- Zuweisung eines willkürlichen Wertes zu der besagten Referenz der besagten Identifikationsnummer, der sich von allen Werten der Identifikationsnummer unterscheidet.

2. Verfahren gemäß Anspruch 1, bei dem für die Zuordnung eines Elementarspeicherblocks dieser unter anderem vor der Etappe zur Zuweisung des Werts der besagten Identifikationsnummer zu der besagten Referenz der besagten Identifikationsnummer für jeden zugeordneten Elementarspeicherblock folgende Schritte vorgesehen sind:

- Überprüfung (A1 der Identität der besagten Referenz für die besagte Identifikationsnummer und von der besagten Identifikationsnummer, wobei der laufende Elementarspeicherblock bei einer positiven Antwort auf diese Identitätsüberprüfung mindestens teilweise dieser Datenstruktur zugeordnet wird,
- Überprüfung (A2) des Vorhandenseins eines ausreichenden verbleibenden Speicherplatzes im besagten Elementarspeicherblock für das Speichern der besagten digitalen Information und, falls dies nicht der Fall ist, Aufruf eines Zuordnungsbefehls eines nachfolgenden Elementarspeicherblocks.

3. Verfahren gemäß Anspruch 1 oder 2, bei dem zum Löschen einer durch eine Identifikationsnummer (ID-Ae) identifizierten Datenstruktur der besagten Referenz der besagten Identifikationsnummer aller dieser Datenstruktur zugeordneten Elementarspeicherblöcke der besagte willkürlich Wert (AAAA) zugeordnet wird.

4. Verfahren gemäß Anspruch 1, bei dem nach der Zuordnung eines Elementarspeicherblocks zu einer Datenstruktur und nach dem Speichern durch Schreiben der besagten digitalen Information in besagten Elementarspeicherblock unter anderem eine Prüfsumme (CKS) des Elementarspeicherblocks berechnet wird.

5. Verfahren gemäß Anspruch 1, das unabhängig von der Zuordnung eines Elementarspeicherblocks zu einer Datenstruktur unter anderem folgende Schritte enthält:

- Auswahl (A51) eines der zugeordneten Elementarspeicherblöcke nach einem zufallsbedingten Auswahlkriterium und
- Berechnung (A53) einer Prüfsumme (CKS (X)) des besagten zugeordneten Elementarspeicherblocks.

6. Verfahren gemäß Anspruch 5, bei dem die besagte Auswahl und danach die besagte Berechnung eines Überprüfungswertes periodisch mit einem festgelegten Zeitwert ausgelöst werden.

7. Eingebettetes System, das einen Speicherbereich enthält, der dynamisch einer (oder mehreren) Datenstruktur(en) (ID_Aj) zugeordnet wird, die durch eine Identifikationsnummer in Form von digitalen Informationspaketen identifiziert wird (werden), wobei der besagte Speicherbereich in Elementarspeicherblöcke (BL1) unterteilt wird und jeder Block mit einer Referenz der besagten Identifikationsnummer verbunden ist, wobei die besagte Referenz Folgendes enthält:

• den Wert der besagten Identifikationsnummer wenn der Elementarspeicherblock zugeordnet wurde,
• einen zufälligen Wert, der sich von allen Identifikationsnummern unterscheidet, wenn der Elementarspeicherblock gelöscht wurde.

8. Eingebettetes System gemäß Anspruch 7, **dadurch gekennzeichnet, dass** es als programmierbaren nicht flüchtigen Speicher (18a) ein Kennzahlensystem des Speicherbereichs für die einzelnen Elementarspeicherblöcke enthält, wobei das besagte System pro Elementarspeicherblock mindestens folgendes enthält:

- eine Referenz für eine Identifikationsnummer einer Datenstruktur (ID_Ai), der der entsprechende Elementarspeicherblock zugeordnet wurde;
- einen Wert für den belegten Speicherplatz (LIi) im besagten zugeordneten Elementarspeicherblock.

9. Eingebettetes System gemäß Anspruch 7, in dem das besagte System unter anderem für jeden Elementarspeicherblock eine Prüfsumme (CKS1a bis CKS2b) des entsprechenden zugeordneten Elementarspeicherblocks enthält.

# FIG.1.
### (ART ANTÉRIEUR)

# FIG.2a.

FIG.2b.

FIG.3. EFFACEMENT APPLICATION

GÉNÉRATEUR
D'UNE VALEUR
ALÉATOIRE A∈[1, L]     A51

RÉPÉTITION
PÉRIODIQUE

A54

APPEL EN LECTURE
$BL_d(X) = BL_A(X)$     A52

A53     A55

CALCUL DE CKS(X)
VÉRIFICATION     —→     ERREUR

+

A5

FIG.2c.

14     16     18a     10

μP     RAM     MEM
PROGRAMMABLE

I/O

12

SI

20

ROM     18b

18

MÉMOIRE NON
VOLATILE

| ID_A1 | LI1 | CKS1a | CKS1b | ID_A2 | LI2 | CKS2a | CKS2b |

FIG.5.

APPLET 1

| CODE |
|------|
| DATA |

APPLET 2

| CODE |
|------|
| DATA |

APPLET 3

| CODE |
|------|
| DATA |

APPLET 4

| CODE |
|------|
| DATA |

## FIG.4a.

ÉTAPE 1
INSTALLE APPLET1
INSTALLE APPLET2

ÉTAPE 2
EFFACE
APPLET 1

ÉTAPE 3
INSTALLE
APPLET 3

ÉTAPE 4
INSTALLE
APPLET 4

| 1c |
|----|
| 1d |
| 2c |
| 2d |
| |

| |
|----|
| 2c |
| 2d |
| |

| 3d |
|----|
| 2c |
| 2d |
| 3c |

| 3d |
|----|
| 4c |
| 4d |
| 2c |
| 2d |
| 3c |
| 4d |

## FIG.4b.

**EP 1 346 287 B1**

## RÉFÉRENCES CITÉES DANS LA DESCRIPTION

**Documents brevets cités dans la description**

- WO 0116759 A

- EP 0686918 A